(19) Europäisches Patentamt
European Patent Office
Office européen des brevets

(11) **EP 1 817 263 B1**

(12) **EUROPEAN PATENT SPECIFICATION**

(45) Date of publication and mention
of the grant of the patent:
**09.04.2014 Bulletin 2014/15**

(21) Application number: **04803452.4**

(22) Date of filing: **02.12.2004**

(51) Int Cl.:
*G02B 6/02* (2006.01)      *C03B 37/025* (2006.01)
*C03B 37/03* (2006.01)      *C03B 37/027* (2006.01)
*G02B 6/10* (2006.01)

(86) International application number:
**PCT/EP2004/013713**

(87) International publication number:
**WO 2006/058551 (08.06.2006 Gazette 2006/23)**

(54) **METHOD, SYSTEM AND DEVICE FOR IMPARTING A PREDETERMINED ROTATION TO AN OPTICAL FIBRE**

VERFAHREN, SYSTEM UND VORRICHTUNG ZUM VERSEHEN EINER LICHTLEITFASER MIT EINER VORBESTIMMTEN DREHUNG

METHODE, SYSTEME ET DISPOSITIF POUR CONFERER UNE ROTATION PREDETERMINEE A UNE FIBRE OPTIQUE

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**15.08.2007 Bulletin 2007/33**

(73) Proprietor: **Prysmian S.p.A.**
**20126 Milano (IT)**

(72) Inventors:
• **COCCHINI, Franco**
**I-84121 Salerno (IT)**
• **MALAFRONTE, Giuseppe**
**I-80053 Castellammare di Stabia (NA) (IT)**

• **MAZZOTTI, Andrea,**
**c/o PRYSMIAN Cavi e Sistemi Telecom S.r.l.**
**Milano (IT)**
• **TESTA, Gerardo**
**I-84091 Battipaglia (SA) (IT)**

(74) Representative: **Raimondi, Margherita et al**
**Dott. Ing. Prof. Alfredo Raimondi S.r.l.,**
**Piazzale Cadorna, 15**
**20123 Milano (IT)**

(56) References cited:
**EP-A- 1 439 150          WO-A-01/33184**
**US-A1- 2002 134 114**

**Description**

The present invention relates to the field of optical fibre processing, in particular to the techniques of optical fibre manufacturing wherein the optical fiber is rotated about its axis for lowering the polarization mode dispersion (PMD) of the optical fibre or of an optical link comprising the optical fibre.

More specifically, the present invention applies to any process in which an optical fibre is advanced in a predetermined direction and a rotation about its axis is imparted to it during its advance. This process may be, for example, a process for producing an optical fibre (typically a drawing process) or a process for manufacturing an optical cable by a plurality of optical fibres.

In optical fiber and optical cable manufacturing, various techniques are known for applying a torsional rotation to an optical fiber about its axis. Such rotation has been demonstrated useful for various applications, such as for example for manufacturing a multimode optical fiber having an increased fiber bandwidth or for manufacturing an optical fiber, or an optical cable containing an optical fiber, having a reduced polarization mode dispersion (PMD).

It is known that the "single mode fiber" commonly used in communication systems is not purely single mode and that, rather, it supports two modes with perpendicular polarizations. These two polarizations form an orthogonal basis set and any configuration of light that propagates through a single mode fiber can be represented by a linear superposition of these two modes.

If the fiber is perfectly circularly symmetric in both geometry (including optical properties such as the refractive index) and internal and applied stress, the two polarization modes are degenerate and propagate with the same group velocity. However, a typical optical fiber is not perfectly circularly symmetric, in part because of various factors present during manufacturing. Imperfections, such as geometric deformation and stress asymmetry, break the degeneracy of the two modes. For example, the cross section of a typical optical fibre may be slightly elliptical in shape. As a result, the two polarization modes propagate with different propagation constants. The difference between the propagation constants is termed birefringence. Birefringence causes the polarization state of light propagating in the fiber to evolve periodically along the length of the fiber. The distance required for the polarization to return to its original state is the fiber beat length, which is inversely proportional to the fiber birefringence. Typical beat lengths observed in practice range from as short as 2-3 millimetres (a high birefringence fiber) to as long as 10-100 meters (a low birefringence fiber).

In addition, the presence of birefringence means that the two polarization modes travel at different group velocities and have a time delay difference after travelling the same distance, the difference increasing as the birefringence increases. The differential time delay between the two polarization modes is called polarization mode dispersion, or PMD, which typically scales as the square root of fiber length for long distances (unit of measure ps/√km). PMD causes signal distortion that is very harmful for high bit rate systems and analog communication systems. This phenomenon is therefore undesirable in systems of optical signal transmission, especially in those operating over long distances.

Various methods to reduce PMD have been disclosed which involve imparting a rotation into the fiber during manufacturing. The rotation causes the internal geometric and/or stress asymmetries of the fiber to rotate about the fiber's axis as one progresses down that axis. This assures that the asymmetries are 'averaged' during the propagation of the optical radiation along the fiber, thus reducing the impact of PMD. More in details, the rotation induces an internal coupling between the two orthogonally polarized modes.

A rotation imparted to a fiber may result in an imparted 'spin' or 'twist', or a combination thereof.

The 'spin' is a permanent torsional deformation impressed on the fiber when the fiber material in a hot zone is caused to be torsionally deformed, resulting in the deformation being frozen into the fiber as it cools from its molten state, without the generation of torsional stress.

The 'twist' refers to the rotation introduced onto the cooled optical fiber. In this case, a combination of rotation of the asymmetries and of torsional stress will occur because the fiber becomes relatively rigid compared to its molten state. Twist can be undone or reduced by applying a rotation in the other direction, whereas spin is permanent. Extreme amounts of twist can cause microscopic cracks, and contribute or cause the ultimate physical destruction of the fiber. Consequently, it is desirable to reduce or eliminate twist introduced on the fiber. One method of reducing twist on optical fiber is to respool the fiber by unwinding it and rewinding the fiber.

Techniques have been developed which rely on spinning the fiber as it is drawn (see, e.g., patent application US2004/0163418). The process of drawing an optical fibre is typically carried out by heating a glass preform to a temperature above the softening point and drawing downwards the molten material so as to produce the optical fibre itself. The fibre is then typically made to pass through a diameter monitor, then through a coating applicator, where a polymer coating is applied to the optical fibre which has now substantially cooled, and then through a coating concentricity monitor, a curing station and a coating diameter monitor. Below, drive and guide means pull the fibre and guide it towards a take-up spool. A spinning device is typically placed downwardly the coating apparatus and it may comprise for example a roller or other elements apt to impart an angular movement to the fiber and to provide spin. By performing the spinning during drawing, i.e., when the root of the preform is substantially molten, essentially pure rotation is performed on the fiber asymmetries.

For the purpose of the present invention, the term 'spinning device' will refer to any device which is apt to impart to a fiber a torsional rotation about its axis, independently by the fact that it is used to impart a spin or a twist.

In the art, various techniques and devices for rotating an optical fiber are known.

For example, US Patent 5,298,047 proposes a method for imparting a torque to the optical fibre during the drawing process, wherein the torque is imparted by altering the angle of take-up rollers, which pull the fiber from the preform, making a guide roller of the optical fibre, having its axis perpendicular to the axis of advance of the fibre, move in a suitable way, by alternate oscillations in the clockwise and counter-clockwise directions.

Patent application US 6,324,872 proposes a spinning device (see Figs. 4 thereof) comprising a pair of elements, located on opposite sides of the optical fibre drawing axis, each having its own surface region for contact with the fibre. At least one of the two surface regions is moved in a direction transverse to the direction of drawing in such a way that the two surface regions are in motion relative to each other and therefore impart to the optical fibre a rotation about its axis. For example, the pair of elements may consist of a pair of rollers with their axis of rotation perpendicular to the drawing direction, at least one of which is capable of moving in a reciprocating way along its own axis so as to impart an alternating spin to the fiber.

Generally, the amount of actual spin which is actually introduced into the optical fibre is different from the theoretical amount that would be introduced if 100% of the rotation would be transferred from the spinning device to the fiber. According to the Applicant, there are various known factors affecting the rotational transfer imparted into the fiber, for example:

- the long span of fiber between the neck-down region and the spinning device;
- the presence of devices along this span of fiber such as rollers or coating apparatus, which cause frictional forces to arise;
- the viscous drag characteristics of the coating;
- the viscous drag characteristic of the neck-down itself;
- temperature differential of the fiber along its length; and
- the undesired application of non-negligible twist by the drawing system.

Thus, while the spinning device imparts an angular movement at a given point along the draw line, a typically lower angular movement is imparted near the neck-down region.

The Applicant has also observed that the above difference may also occur because of mechanical effects in the spinning device, e.g., slippage at the interface between the fiber and the spinning device. For example, the fiber may slip on the rollers that impart the spin.

The existence of the imparted spin can be readily ascertained, e.g., by microscopic examination of bubbles in the fiber to determine rotation of the core, or by means of a travelling magneto-optic modulator. An alternative technique for controlling the internal rotation of the principal axes of a birefringent optical fibre during the process of fabricating the fibre consists in laterally illuminating the optical fibre with a He-Ne laser beam in such a way as to generate interference fringes by means of the backscattered light. A rotation of the optical fibre causes a shift of the fringes, owing to the ellipticity of the fibre or any anisotropy of the refractive index due to stresses. It is then possible to determine the rotation of the principal axes of birefringence of the optical fibre by measuring the shift of the fringes.

In Patent Application US2002/0178758 of the same Applicant, it is proposed a technique for on-line measurement of the actual rotation imparted to an optical fibre during the processing of the fibre. The actual rotation imparted to the optical fibre is determined on the basis of the measurement of the diameter of the optical fibre. This is because, when the diameter of an optical fibre advancing in a predetermined direction and made to rotate about its axis is measured, the asymmetries and anisotropies of the optical fibre cause an oscillation of the measured value between a minimum and a maximum value, with a frequency which is correlated with the velocity of rotation of the fibre. This scheme uses real time Fourier analysis of the fiber diameter data as obtained by transverse on-line measurements of the optical fiber shortly after is it drawn from the preform. The system uses power spectrum analysis to correlate the signals with the spin rate.

The information on the spin rate has been used to retroactively control the spin imparted to the optical fibre, in such a way as to produce a fibre with an actual spin corresponding to the one predefined according to the specifications and therefore with a predetermined response in terms of PMD. In case of an alternate spin function (e.g. sinusoidal) having a time frequency of inversion $\nu$ (in inverse seconds), a feed-back loop controls, responsively to the actual spin measurement data, the frequency of inversion $\nu$ of the spinning device. Depending on the spinning device used, it has also been suggested to control the maximum excursion of the moving member of the spinning device (called 'amplitude'), as an alternative or in addition to the variations of the inversion frequency $\nu$.

An alternative technique for real time determination of spin and twist rate used to alter the spin rate or draw rate is disclosed in Patent US 6,791,678, which is based on filtering the diameter measurement signal to get the spin or twist data.

The Applicant has now found that controlling with a feed-back loop the amplitude and/or the inversion frequency of the spinning device could be not as effective as expected in order to guarantee the target spin rate. If the spinning device does not work properly, e.g. if the fiber interacts weakly with the spinning device, such a feedback action could fail to set the desired rotation of the fiber. Moreover, an attempt to increase the actual rotation simply by increasing the inversion frequency, as described in cited patent application US2002/0178758, could result in an increase of the amplitude of vibration of the fiber out of the drawing axis, so increasing the amount of breaks during drawing and/or during the subsequent mechanical screening.

The Applicant has also found that an additional problem affects the transfer to the optical fiber of the spinning function ideally imparted by the spinning device. This additional problem relates to the variation of the frictional force between the optical fiber and the spinning device during the processing of the fiber, thus causing a variable degree of slippage of the fiber on the spinning device. This problem may affect the actual rotation rate at an extent greater than the one that can be counterbalanced by controlling the amplitude and/or frequency spinning parameters.

The Applicant has found that controlling the amplitude and/or the frequency of the spinning device may be insufficient and that it is important to control the frictional force of the spinning device in order to suitably control the degree of slippage of the fiber onto the spinning device itself. This control of the slippage of the fiber may exemplarily be aimed at avoiding the slippage itself, or at reducing it at a suitable level. The friction control can be achieved via a feed-back loop fed by the on-line measurement of the actual rotation rate. The amplitude and/or frequency of the spinning device may be controlled in addition to the frictional force. In other words, the Applicant has realized that adjusting the frictional force responsively to a real time measurement of the actual spin imparted to the fiber with a feed-back system allows to timely adjust the spinning conditions so that the spin really obtained in the fiber satisfactorily corresponds to the target spin function designed for the fiber.

Patent application US 6,324,872, already cited, discloses that the two rollers of the spinning device are arranged at the same point along the longitudinal extent of the fiber path, on opposite sides of the path, so that the rollers define a nip therebetween. A micrometer adjustment and locking device are provided for controlling the position of second roller in the cross-path directions. First roller is biased by a spring in the cross-path direction toward the second roller. An adjustable stop limits movement of the first roller in the cross-path direction. This stop assures that the distance between the two rollers will always be at least equal to a predetermined minimum, and thus assures that the rollers will not crush the fiber. If the diameter of the fiber is slightly greater than this predetermined minimum distance, the carriage will remain engaged with the stop. The resilient circumferential surfaces of the rollers will compress slightly, and the fiber will be forcibly engaged with both circumferential surfaces. If the fiber diameter substantially exceeds the predetermined minimum, first roller will move in the cross-path direction away from second roller against the bias of spring. In either case, a fiber extending along path between the rollers will be engaged forcibly between the rollers at nip.

The Applicant has found that the interaction strength (i.e. the frictional force) between the fiber and the spinning device can be actively controlled so as to compensate the variations that the interaction strength would otherwise suffer during the process itself. The frictional force between the fiber and the spinning device corresponds to the product of the compression force acting on the fiber and the coefficient of friction between the material covering the surface of the moving member of the spinning device and the material covering the optical fiber surface (e.g. the coating). Accordingly, the Applicant has found that, in order to guarantee the correct spinning rate, it is not sufficient to maintain a specific, predetermined compression force during the spinning of fiber, because unpredictable variations of the coefficient of friction during the process could cause variations of the frictional force which are likely to substantially alter the real spin function applied to the fiber.

The Applicant has experienced that, for a given choice of materials (which may be optimised with respect to the coefficient of friction therebetween), the coefficient of friction typically varies during the process, mainly due to:

- possible instantaneous variations of the degree of curing of the fiber coating (which may be different from the final degree of curing);
- possible instantaneous variations of the temperature of the fiber coating and of the surface of the moving member of the spinning device;
- possible variations of the degree of wear of the surface material of the moving member;
- possible variations of the elastic moduli of the materials (e.g. fiber coating and moving member coating) which causes a variable extension of the contact surface for the same compression force; and
- possible variations of the viscous modulus of the above materials which may cause different degrees of dissipation of the adhesion energy.

According to the invention, the Applicant has found a solution which comprises an on-line tuning of the frictional force in function of the measured final result (on the fiber) of the rotating action of the spinning device. In a preferred embodiment, such tuning comprises an adjusting of the gap between the two elements, engaging the fiber, of the spinning device. The Applicant has verified that such a gap is a useful parameter to get the target rotation, once the appropriate oscillation frequency and amplitude of the spinner device have been set. Such fine adjusting can be electronically controlled and can be performed almost instantaneously without interruption of the process.

In a first aspect, the present invention relates to a method of imparting a predetermined rotation to an optical fibre, the method comprising the steps of advancing the optical fibre in a predetermined direction, imparting to the optical fibre, during the step of advancing, a rotation about its axis through a frictional force acting on the optical fiber, measuring a parameter related to the imparted rotation during the step of advancing the optical fibre and controlling, during the step of advancing the optical fibre, said frictional force responsively to the measured parameter, so as to achieve the predetermined rotation.

Typically, said frictional force is generated by the contact of the surface of the optical fiber with the surface of a moving member imparting the rotation to the optical fiber. In this case the frictional force is typically the product of a compression force of the optical fiber against said surface of the moving member and a coefficient of friction between the surface of the optical fiber and the surface of the moving member, and, preferably, the step of controlling the frictional force comprises controlling said compression force. A feasible and practical way of measuring the parameter related to the imparted rotation comprises the step of measuring the diameter of the optical fiber and, preferably, generating a measurement signal related to the diameter of the optical fiber, generating a frequency spectrum of said measurement signal and evaluating said parameter from said frequency spectrum.

In a particular embodiment, the step of controlling the frictional force of the method above comprises the steps of comparing the measured parameter to a predetermined value related to the predetermined rotation and controlling the frictional force in response to said comparison. Preferably, in case the measured parameter is less than the predetermined value, the frictional force is increased. This embodiment has the advantage to guarantee an actual rotation always above a target minimum threshold value.

Preferably, the parameter related to the imparted rotation is the average rotation. The Applicant has found that the measure of this specific parameter is accurate enough for this purpose.

In one embodiment, the step of measuring the parameter related to the imparted rotation further comprises the step of evaluating a quality parameter of said frequency spectrum and the step of controlling the frictional force comprises, in case said evaluated quality parameter is less than or equal to a predetermined threshold value, the step of increasing the frictional force. The use of a quality parameter for feedback control is particularly advantageous because of its reliability and accuracy.

In a second aspect, the invention relates to a method of producing an optical fiber comprising the steps of heating a glass preform beyond its softening point, drawing the optical fibre from said preform in a drawing direction, applying a protective coating to the optical fibre and imparting a predetermined rotation to the optical fibre according to any of the methods above.

In a third aspect, the invention relates to a system for imparting a predetermined axial rotation to an optical fiber advancing in a direction, the system comprising a spinning device suitable to be rotationally coupled to the optical fiber through a frictional force, an actuator operatively associated with said spinning device to adjust said frictional force, a measurement device apt to measure, while the optical fiber is advancing in said direction, a parameter related to the fiber rotation and a control unit connected with said measurement device and with said actuator to drive in operation said actuator responsively to said measured parameter, so as to achieve the predetermined rotation. Preferably, the control unit includes a circuit suitable to compare said measured parameter with a predetermined value related to the predetermined rotation and to generate a control signal responsive to said comparison in order to drive said actuator.

In a fourth aspect, the invention relates to a device for rotating an optical fiber about its axis, the device comprising a contact member apt to apply a frictional force to the surface of the optical fiber and to impart a rotation to the optical fiber about its axis by said frictional force, and an actuator member operatively connected to said contact member, characterized in that the actuator member is electronically controllable in response to an external electronic signal to vary said frictional force.

In a configuration, the device comprises a further contact member apt to define, together with said contact member, a gap to receive the optical fiber, wherein the actuator member is apt to act on the contact member to control said gap. Preferably, the device further comprises a first support member carrying said contact member, a second support member carrying said further contact member and an elastic member acting on the first support member to thrust said first support member towards said second support member, wherein said actuator member acts between said first and second support against the action of said elastic member to control said gap. In an embodiment, said actuator member is a piezoelectric member.

In an alternative configuration, the device comprises a further contact member apt to contact the optical fibre opposite said contact member, wherein said actuator member is apt to control a biasing force between the contact member and the further contact member.

The invention is described in detail below with reference to the attached figures, in which a non-restrictive example of application is shown. In particular,

- Figure 1 shows a flow chart relating to some steps of the method according to the present invention;
- Figure 2 shows a drawing system in which a process of drawing an optical fiber using the method according to the present invention is carried out;
- Figures 3 and 4 show a side view and a top view, respectively, of a spinning device in accordance with one aspect of the present invention.
- Figure 5 shows the average rotation measured during a drawing process in accordance with the present invention;
- Figure 6 shows the average rotation measured during a drawing process without the use of the feedback control of the present invention;
- Figure 7 shows the average rotation and the spectrum quality measured during a drawing process in accordance with the present invention.

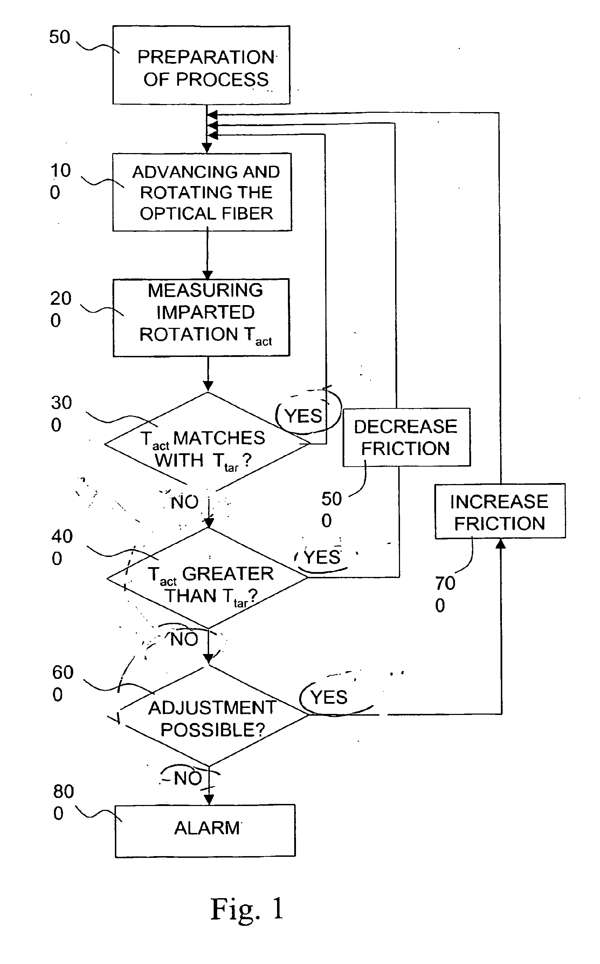

The method for imparting a rotation to an optical fiber according to the present invention will be described with reference to the flow chart in Fig. 1.

In a preliminary step of the method (block 50), certain process parameters may be set for the preparation of the process.

First, it may be set a target rotation $T_{tar}$ which is to be imparted to the optical fiber, for example in order to have a desired value of PMD or for other purposes.

For the purposes of the present invention, the term "rotation" denotes the ratio between the angular velocity of rotation $d\theta/dt$ of the optical fibre (where $\theta$ is the angle -in radians- of rotation of the optical fibre measured with respect to a fixed reference point) and the velocity of fiber advancing, $v_f$. The rotation defined in this way, multiplied by the factor $1/2\pi$, can be expressed in turns/m. The rotation as a function of distance along the fiber is directly derivable from the corresponding rotation as a function of time through the fiber draw velocity (and vice versa). The advancing velocity $v_f$ is normally constant in the general case, but can be variable.

Advantageously, the target rotation $T_{tar}$ may be set by properly choosing a target value or a target range of values for one or more parameters related to the rotation imparted. Advantageously, suitable parameters may be the maximum rotation $T_{max,act}$ or the average rotation $T_{ave,act}$ (in turns/m), which will be defined below. A minimum value $T_{MIN}$ for the actual average rotation $T_{ave,act}$ may for example be established. Such minimum average rotation $T_{MIN}$ may be set, e.g., at about 1 turns/m or at about 1.5 turns/m. In addition or in alternative, a target maximum average rotation $T_{MAX}$ may be set, e.g. at about 4 turns/m or at about 3 turns/m.

A further process parameter which may be set is the advancing velocity $v_f$ of the optical fiber. A still further process parameter which may be set is an initial value of the frictional force acting on the optical fibre in order to impart the rotation. For example an initial value $\delta_0$ may be set for a parameter $\delta$ of the spinning device, such parameter being related to the frictional force acting on the optical fibre during the rotation. For example, this parameter may be the width $\delta$ of the gap defined by two moving members which forcibly engage the fiber in order to impart the rotation, as will be explained below. Depending on the type of the spinning device used, other parameters may be used, as described below.

Depending on the spinning device used, initial values of other parameters of the spinning device may be set, such as for example the inversion frequency $\nu$ and the maximum excursion A of the moving member of the spinning device in its movement which produces the rotation of the optical fibre. For example, if the spinning device comprises a pair of rollers of which at least one can be moved along its rotation axis, the maximum excursion A corresponds to the maximum longitudinal relative displacement of the at least one roller starting from an equilibrium position. The maximum excursion of the moving member of the spinning device determines the value $\theta_{max,act}$ of the actual maximum angle of rotation of the optical fibre.

The value of the inversion frequency $\nu$ may be selected according to the target rotation $T_{tar}$ (for example the predetermined value $T_{MIN}$ and/or $T_{MAX}$) and the advancing velocity $v_f$. A possible range is from 1 Hz to 15 Hz.

On completion of the preliminary step, the process begins (block 100) making the optical fiber advancing in a predetermined direction and rotating about its axis through a frictional force having the initial value of frictional force set in the previous step. For example, a spinning device is made to act on the fiber with the initial value $\delta_0$ of the parameter of the spinning device related to the frictional force.

According to the invention, the actual rotation $T_{act}$ imparted to the optical fibre is measured on line (block 200) during the advancing of the optical fibre. In this step, the maximum rotation $T_{max,act}$ actually imparted to the optical fibre or, preferably, the actual average rotation $T_{ave,act}$, may be measured.

According to the invention, the result of this measurement is used to retroactively control the actual rotation imparted to the optical fibre, by adjusting the value of the frictional force acting on the fiber and responsible of the fiber rotation. For example, the value of the parameter $\delta$ of the spinning device related to the frictional force is finely controlled.

In detail, the measured actual rotation $T_{act}$ is compared to the predefined target rotation $T_{tar}$ (block 300). For example, it is checked whether the measured value of the average rotation $T_{ave,act}$ is in the predetermined range (block 300). If the measured actual rotation $T_{act}$ is compliant with the predetermined target rotation $T_{tar}$ (YES output of block 300), it is not necessary to vary the actual rotating frictional force. Consequently the processing of the fibre may continue without modifications (block 100) and the previous steps (blocks 200 and 300) are repeated.

If the measured actual rotation $T_{act}$ is outside the predetermined specifications for the rotation $T_{tar}$ (NO output of block 300), then a further check is performed (block 400) to determine if the actual rotation $T_{act}$ exceeds the predetermined rotation $T_{tar}$. For example, a check may be made as to whether $T_{ave,act} > T_{MAX}$.

If the actual rotation exceeds the predetermined rotation, e.g. $T_{ave,act}$ is greater than $T_{MAX}$ (YES output of block 400), the frictional force is decreased, in such a way that a certain degree of slippage is allowed and the average actual rotation $T_{ave,act}$ is decreased (block 500). The process continues with the rotation of the optical fibre (block 100) in the new conditions, and with the repetition of the steps 200, 300 and 400 of Fig. 1.

If the actual rotation is below the predetermined rotation, e.g. $T_{ave,act}$ is less than $T_{MIN}$ (NO output of block 400), preferably a further step (block 600) determines whether it is possible to further increase the frictional force exerted onto the fiber. For example, it is assessed if the frictional force would not reach a limit which may cause the fiber break or be mechanically damaged or weakened. If this limit has not been reached, and therefore if the frictional force can be increased further (YES output of block 600), the frictional force is increased in such a way as to reduce the slippage and increase the actual rotation (block 700), e.g the average actual rotation $T_{ave,act}$. The process continues with the rotation of the fibre (block 100) in the new conditions and with the repetition of the steps previously described.

If the operating limit of the frictional force exerted onto the fiber, e.g. by the spinning device, has been reached, in other words if the frictional force cannot be increased further (NO output of block 600), an alarm signal is generated. The corresponding optical fiber is then identified and further processed. The process may be interrupted or may continue with the repetition of the steps 100-600 of Fig. 1.

Depending on the type of spinning device used, variations of the inversion frequency $\nu$ and /or of the maximum excursion A of the moving member of the spinning device may also be introduced, in addition to the variations of the frictional force, to control the actual rotation $T_{act}$, as described in cited application US2002/0178758.

The adjustment of the friction force (steps 500 and 700) responsively to the feedback signal may be performed either by an operator or, more preferably, automatically.

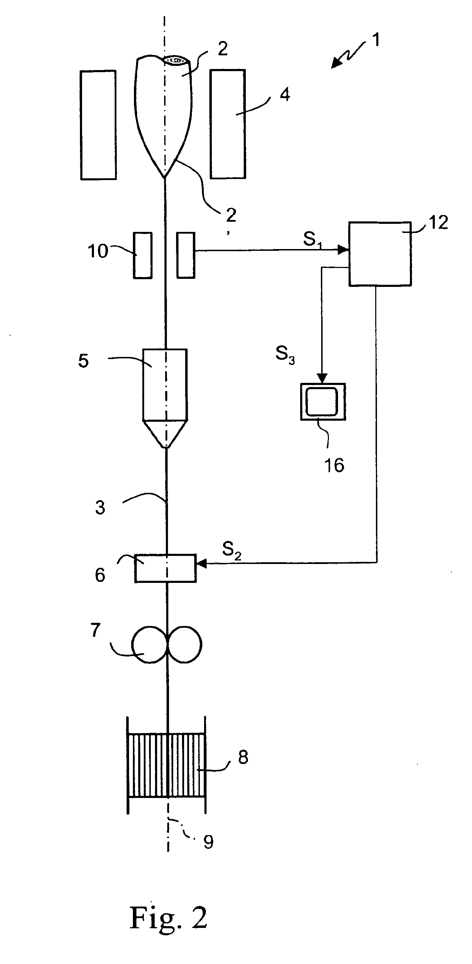

Figure 2 shows schematically a drawing system 1 for drawing an optical fibre 3 exemplarily using the method of the present invention.

The optical fiber 3 may be any kind of optical fiber, for example single mode, multimode, dispersion compensating, specialty fiber, etc, made of any suitable material such as glass or polymer.

The drawing system 1 comprises a plurality of parts essentially aligned along a drawing direction, typically vertical. The drawing system 1 comprises a furnace 4 capable of heating a preform 2 to beyond its softening point. The preform may be formed before or contemporarily to the drawing process by any suitable technique, e.g. OVD, VAD or MCVD. The furnace 4 may be of any type capable of producing the controlled softening of the preform 2, such as an induction furnace.

The drawing system 1 typically also comprises a pulling device 7 capable of pulling the optical fibre 3 downwards at a predetermined velocity $v_f$ (called the drawing velocity) and a take-up spool 8 on which the optical fibre 3 is wound at the end of the drawing process.

Advantageously, a coating device 5 for the application of a protective coating to the optical fibre 3 is placed along the path of the fiber.

The drawing system 1 also comprises a spinning device 6, preferably positioned between the coating device 5 and the pulling device 7, apt to impart a rotation to the optical fibre 3 about its axis 9. The spinning device 6 is characterized by the fact of being apt to impart a torsional force to the optical fiber about its axis 9 via a frictional force. Typically, it is provided with at least one moving member capable of contactingly interact with the external surface of the optical fibre 3, so that a frictional force is generated between the surface of the moving member and the surface of the optical fiber (e.g. the fiber coating). The frictional force has at least a component which is directed along an axis perpendicular to the fiber axis 9, so as to cause the fiber 3 rotating about its axis.

The frictional force is typically the product of a compression force which thrust the fiber against the spinning device and the coefficient of friction between the material covering the surface of the spinning device in contact with the optical fiber and the material covering the optical fiber surface (e.g. the coating).

The spinning device 6 may be of any kind suitable to apply to the fiber a torque via a frictional force. For example, the device may include a rotating member, such as a roller, configured so that its rotational axis may tilt with respect to a predetermined direction perpendicular to the fiber axis, as described in cited US Patent 5,298,047. In this configuration, the compression force depends by the tension of the fiber (called 'drawing tension') and by the deflection of the fiber with respect to the unperturbed fiber axis due to the presence of the moving roller. Accordingly, a way to control the frictional force, for a given drawing tension, is to finely adjust the transversal position $\delta$ of the tilting roller with respect to the fiber axis. In order to increase the frictional force, it is possible to advance the tilting roller so as to increase the above fiber deflection. This increases the compression force of the fiber against the tilting roller and hence the frictional force, for given tension and frictional coefficient. Conversely, withdrawing the tilting roller in order to reduce the fiber deflection will decrease the compression force and hence the frictional force.

The spinning device 6 may alternatively be, for example, any of the types described in the previously cited patent US 6,324,872. In particular, the device 6 may include a pair of elements reciprocally facing at the opposite sides of the optical fiber 3 and having surfaces interacting with the optical fibre. For example the elements may be rollers, each of which having its axis perpendicular to the drawing axis 9, and wherein at least one roller is moved in a reciprocating way along its own axis, in such a way as to impart an alternating spin to the optical fibre 3. For example, the spinning device 6 is capable of imparting to the optical fibre 3 an alternating spin with a predetermined constant inversion frequency $\nu$ (in inverse seconds).

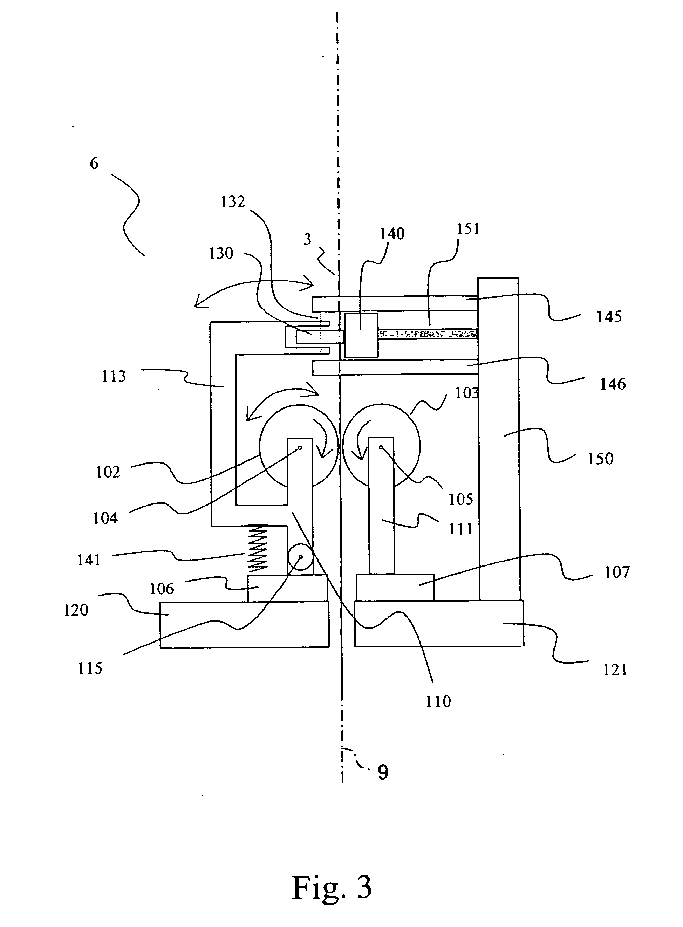

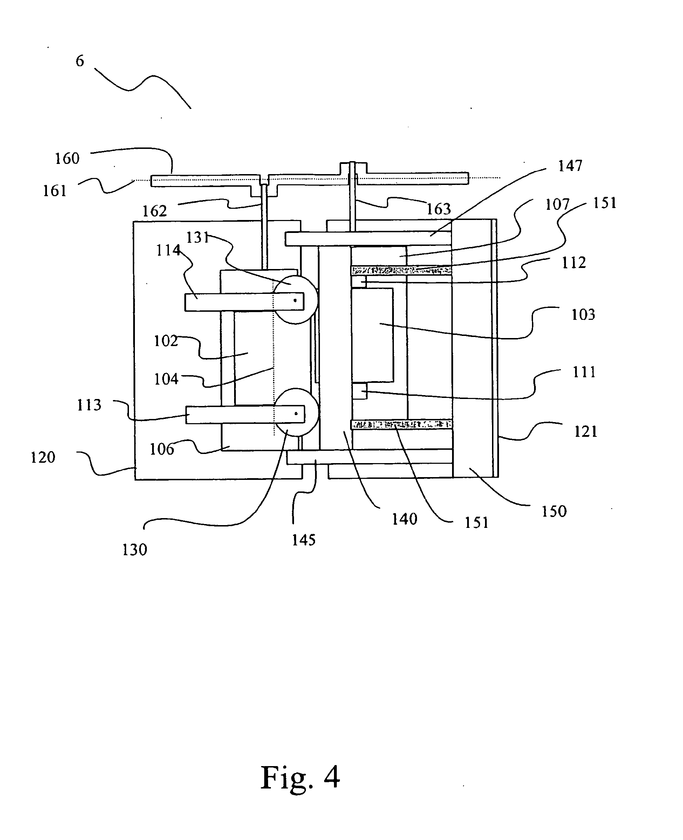

In the configuration comprising a pair of elements reciprocally facing at the opposite sides of the optical fiber, two cases may be considered for the generation of the compression force. In the first case, the two elements rigidly define a gap therebetween. For example, the force biasing the two elements one toward the other is much greater than the compression force typically acting on the fiber during spinning and a stop limits the movement of one element toward the other under the biasing force, so as to define the gap. The 'gap' is defined as the distance between the surfaces of the first and the second element at the point where the fiber is to be located, in absence of the fiber 3. The gap is typically smaller than the diameter of the coated fiber. When the fiber is inserted in the gap between the two elements, the two elements substantially maintain their original relative distance. The elastic reactions of the fiber coating and the roller coating generate the required compression force between the fiber and the engaging members. The compression force is hence a function of the width of the gap between the first and the second element. Increasing this gap typically result in a decrease of the compression force and hence of the frictional force, and viceversa. Further below, an example of a spinning device 6 according to this embodiment will be described in details with reference to Fig. 3 and 4.

In the second case, the biasing force of the two elements is not counteracted by a stop and it directly determines the compression force. For example the two elements are biased by a spring and the elastic force of the spring is controlled by way, e.g., of controlling the degree of compression, such as varying the position of one end of the spring.

Accordingly, an alternative way to control the frictional force is to adjust the force biasing the two members. In this case, in order to increase or decrease the frictional force, the biasing force is increased or decreased, respectively. This increases or decreases the compression force of the fiber against the roller. Of course, the present invention contemplates also hybrid configurations combining the two above cases, wherein the control of the compression force may depend by a combination of adjustment of the gap and of the biasing force.

Various functions may be applied to the rotation of the optical fiber 3 via the spinning device 6, such as constant spin rate or variable spin rate functions.

For example, it is preferable to use a pure sinusoid rotation function resulting in substantially equal and opposite rotations being introduced onto the fiber for a given cycle. Other non-uniform spin functions may be used that are not substantially sinusoidal and have sufficient variability, e.g., sufficient harmonic content, to provide a substantial reduction in PMD for a plurality of beat lengths. For example, a spin function can be constructed as a weighted sum of sinusoidal components of different frequencies with the number of components and their weights being chosen to produce an overall function that achieves PMD reduction. The spin function can also be randomly generated. In certain embodiments, the spin function is a frequency-modulated or an amplitude-modulated sinusoidal function. Preferably, spin functions are selected for producing a net twist of zero during drawing.

In the following text it will be exemplarily assumed that the rotation imparted to the optical fibre 3 by the spinning device 6 varies according to a sinusoidal law. It will be assumed that the optical fibre 3 has, as a result of the action of the device 6, an actual angle of rotation $\theta_{act}$ (measured with respect to a fixed reference point) expressed by the relation $\theta_{act} = \theta_{max,act} \cdot \sin(2\pi\nu t)$, where $\theta_{max,act}$ is the maximum actual angle of rotation and $\nu$ is the frequency of inversion of the rotation, and that the optical fibre therefore undergoes an actual rotation $T_{act}$ expressed by the relation $T_{act} = T_{max,act} \cdot \cos(2\pi\nu t)$, where $T_{max,act} = \nu/v_f \cdot \theta_{max,act}$ is the maximum actual rotation.

The drawing system 1 also comprises a measurement device 10 apt to measure the actual rotation imparted to the optical fiber 3 in the proximity, and downstream, of the neckdown of the preform 2. The measurement may be advantageously placed in any position along the path of advancing of the optical fiber 3 where it is needed to measure the actual rotation imparted to the fiber 3.

The fiber rotation's measurement device 10 may be of any kind apt to the purpose, for example it may comprise a diameter monitoring device capable of measuring the diameter of the optical fibre 3 (either bare or coated) during its passage and a processing unit capable of processing the signal generated by the diameter monitoring device in order to generate a fiber rotation measurement, as described in cited Patent Application US 2002/0178758 of the same Applicant. The diameter monitor device may comprise an optical sensor, for example of the interferometric type, located on the axis 9. The diameter monitor is apt to generate an electrical signal responsive of the diameter of the optical fibre 3 to be sent to the processing unit. For example, the diameter monitor generates an electrical signal via an array of photodiodes receiving the interference fringes obtained by directing a laser beam on to the optical fibre. This signal is sent to comparator means which generate a number of electrical pulses correlated with the fringe pattern. Subsequently, means of counting the pulses supply, according to the number of pulses detected, a signal indicating the diameter of the optical fibre.

Another technique for optically measuring the diameter of an optical fibre during the process of its fabrication comprises the steps of transversely illuminating a portion of optical fibre with a light beam, measuring the amplitude of the shadow produced by the portion of optical fibre in a predetermined angular sector about the optical fibre, and determining, from this measurement, the variations of diameter during the process.

The diameter monitoring device advantageously makes a periodic measurement of the diameter of the fibre during the advancing of the optical fibre 3 through it. The diameter monitoring device operates at a predetermined measurement frequency, for example higher than or equal to 500 Hz. The diameter monitoring device generates a signal comprising the sequence of the measured values of diameter. Then, the processing unit calculates the normalized power spectrum P(f) of the signal as a function of frequency f, which typically comprises a plurality of peaks. Advantageously, the peaks of the power spectrum are compared with a preset power threshold $P_{TH}$ (e.g. equal to about 0.1), in order to eliminate contributions of the spectrum having a power below this threshold and, consequently, to reduce the noise. The processing unit then identifies, among the peaks above the threshold $P_{TH}$, the peak having the maximum frequency $f_{max}$. The processing unit finds, from the value of the maximum frequency $f_{max}$, the maximum actual rotation $T_{max,act}$ imparted to the optical fibre 3, given by

$$T_{max,act} = \frac{f_{max}}{2 \cdot v_f} \ [\text{turns/m}] \qquad (1).$$

For the purpose of accuracy of the measurement and of control of the process, it is preferable to calculate the average actual rotation $T_{ave,act}$ imparted to the optical fibre 3, which can be determined by:

$$T_{ave,act} = \frac{f_{ave}}{2 \cdot v_f} \ [\text{turns/m}] \qquad (2),$$

wherein $f_{ave}$ is the average frequency of the set of peaks above the threshold $P_{TH}$, provided by the following relation:

$$f_{ave} = \frac{\sum_{f_{th} \leq f_k \leq f_{max}} P(f_k) f_k}{\sum_{f_{th} \leq f_k \leq f_{max}} P(f_k)} \qquad (3),$$

wherein $f_{th}$ is a cutoff frequency (e.g. 10 Hz) so as to cut some noise near the zero frequency.

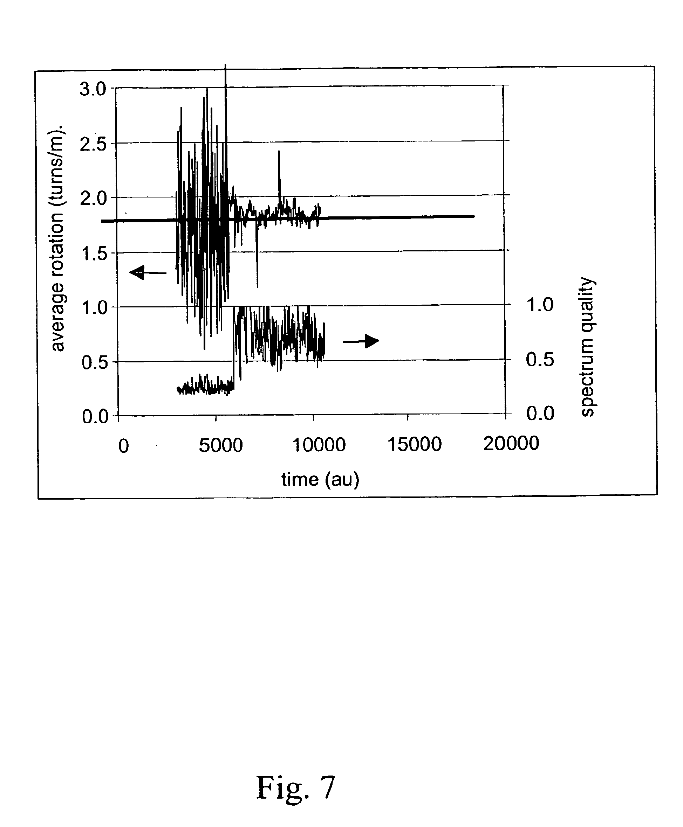

Each power spectrum P(f) has a large number of peaks, among which the peaks located at integer multiples of the inversion frequency $v$ are identified as the 'signal peaks'. The Applicant believes that signal peaks arise from, e.g., elliptical cross-section of the fiber, non elliptical asymmetries (e.g. egg-like cross-section) or phase shift between diameter measurement and spin function. In addition, there are numerous undesired peaks (which represent a kind of noise), due for example to vibrations and oscillations of the optical fibre. The signal peaks therefore represent a subset of the total set of peaks. If the number of these undesired peaks is high, the noise associated with them may make the measurement of the imparted rotation inaccurate. As described below with reference to Fig. 7, the presence of this noise is believed to be an indicator of spinning conditions not satisfactory and this noise can conveniently be used to activate a regulation action based on that.

Advantageously, the processing unit calculates the average power spectrum $P_{ave}(f)$ of a predetermined number of power spectra stored in the processing unit. The average of a plurality of spectra acquired in a time interval in which the frequency of inversion of the rotation is essentially constant has a number of undesired peaks (and, therefore, a quantity of noise) which is much smaller than the individual spectra. The processing unit preferably calculates a 'quality' of the resulting average spectrum $P_{ave}(f)$, which is defined as the ratio of the number of signal peaks $N_p$ (spaced of a quantity equal to integer multiples of the inversion frequency v) and the total number of peaks $N_{p,t}$ present in the resulting average spectrum.

A control unit 12 is provided to the processing system 1 in order to control the operation of the spinning device 6 according to the control algorithm described with reference to Fig. 1. The control unit 12 may also advantageously carry out other functions related to the process. For example it may include the processing unit which elaborate the signal generated by the diameter monitoring, as described above, and/or execute a software algorithm incorporating a spin function and/or control other aspects of the process such as controlling the drawing velocity (by altering the speed of the pulling and take-up devices 7 and 8), or controlling the heat of the heat source 4, for example responsively to diameter measurements received from the diameter measurement device.

The control unit 12 is advantageously configured to receive a first signal $S_1$ from the rotation measurement device 10, store this signal and process it, as described below. It is also configured to generate a second signal $S_2$, which may be sent to the spinning device 6, and, optionally, a third signal $S_3$, which may be sent to a monitor 16.

The operation of the drawing system 1 according to the present invention will now be described with reference to both Fig. 1 and Fig. 2.

Target values or target range of $T_{ave,act}$ and/or $T_{max,act}$ are predetermined before the start of the process. Such values or range represent the actual rotation which is to be imparted to the optical fibre in such a way as to provide the fiber with the desired transmission characteristics, such as the PMD. In the latter case, when optical signals are transmitted into the fiber, the exchanges of power between the propagation modes are such that the effects of the imperfections and irregularities of the fibre are rendered uniform in a length of the fibre equal to at least the beat length. Thus it is possible to reduce significantly the negative effects caused by the asymmetric stress conditions and by the imperfections of shape intrinsically present in the fibre. To achieve this object, it is advantageous to impart to the optical fibre a spin such that an average rotation $T_{ave,act}$ is induced above $T_{MIN}$=1 turn/m or 1.5 turns/m. Optionally, a finite value of $T_{MAX}$ may be predefined, even thought from the point of view of fiber performance, the higher $T_{ave,act,}$ the better the results (for example the PMD tends to decrease for increasing value of $T_{ave,act}$). Nevertheless, an excessive rotation may subject the fiber to excessive mechanical stress and may cause the fiber to oscillate, thus arousing a noisy measure. For example, good values for $T_{MAX}$ may be 4 turns/m or 3 turns/m.

The drawing velocity $v_f$ for a single-mode fibre is typically set in the range from 5 m/s to 30 m/s.

In the preliminary step (block 50 of Fig. 1) the drawing system 1 is prepared by first advancing the preform 2 inside the furnace 4, which has previously been heated to a temperature higher than the softening point. The lower portion of the preform 2 is melted, with consequent generation of a drop of melted material. This drop is elongated downwards under the action of the force of gravity, drawing with it additional melted material in such a way as to form a threadlike element of molten material which is cooled progressively. This threadlike element is made to pass through the spinning monitoring device 10 (which typically includes a diameter monitoring device), the coating device 5, the spinning device 6 and the pulling device 7, and a few turns of it are wound on to the take-up spool 8.

Afterwards (block 100 of Fig. 1), the optical fiber is advanced in a predetermined direction, for example with the activation of the pulling device 7. The pulling device 7 pulls the optical fibre 3 downwards at a velocity which progressively rump-up to the predetermined drawing velocity $v_f$, causing its continuous formation from a lower neck-shaped (called neck-down) portion 2' of the preform 2. The coating device 5 applies the protective coating to the optical fibre 3 which passes through it.

The spinning device 6 is made to act on the fiber 3 with the initial value of the frictional force set at the beginning of the process. For example, the initial value $\delta_0$ of the parameter of the spinning device 6 is communicated to the spinning device 6 by the control unit 12 by means of a second signal $S_2$.

The equipment 10 is used to measure (block 200 of Fig. 1) the actual rotation $T_{act}$ imparted to the optical fibre just below the neck-down region 2', i.e. the actual imparted spin. Such measurement is obtained at the beginning of the drawing process and during the process itself at a rate of at least one detection per one thousand meter of drawn fiber, preferably per one hundred meter. The measured actual rotation may deviate from the predetermined rotation $T_{tar}$, as previously discussed.

The rotation measurement device 10 generates a first signal $S_1$ indicative of the actual rotation imparted to the fiber and sends it to the control unit 12.

According to the invention, the result of this measurement is used to retroactively control the actual rotation imparted to the optical fibre, by adjusting the value $\delta$ of the parameter of the spinning device related to the frictional force.

The control unit 12 compares the measured actual rotation $T_{act}$ with the predetermined reference rotation $T_{tar}$ (block 300). For example, the unit 12 checks whether the measured value $T_{ave,act}$ is above the predetermined value $T_{MIN}$ and/or below the predetermined value $T_{MAX}$. No feedback is fed to the spinning device 6 if the actual rotation comply with the predetermined specification (YES output of block 300).

If the actual rotation exceed the predetermined rotation, e.g. $T_{ave,act}$ is greater than $T_{MAX}$ (YES output of block 400), the control unit 12 in one embodiment generates and sends to the spinning device 6, by means of the second signal $S_2$, the control command to decrease the frictional force, in such a way that the average actual rotation $T_{ave,act}$ may be decreased (block 500 of Fig. 1). The drawing process continues with the rotation of the optical fibre (block 100) in the new conditions and with the repetition of the steps of advancing the fiber, measuring the actual rotation and determining if the actual rotation is in specifications. In another embodiment the control unit 12 generates a third signal $S_3$ to be sent to the monitor 16 so as to be visible by an operator, which may perform the operation of reducing the frictional force of the spinning device 6.

If the actual rotation is below the predetermined rotation, e.g. $T_{ave,act}$ is less than $T_{MIN}$ (NO output of block 400), the control unit 12 makes a further optional check (block 600) to determine whether the frictional force has not reached a limit which may cause the fiber break or become mechanically weak. If this limit has not been reached (YES output of block 600), the control unit 12 in one embodiment sends to the spinning device 6, by means of the second signal $S_2$, the command to increase the frictional force in such a way as to increase, e.g., the average actual rotation $T_{ave,act}$ (block 700). The process continues with the spinning of the fibre (block 100) in the new conditions and with the repetition of the steps previously described. In another embodiment, the control unit 12 may generate the third signal $S_3$ to be sent to the monitor 16 so as to be visible by an operator, which may perform the above operation of increasing the frictional force of the spinning device 6.

Advantageously, the fiber corresponding to an actual rotation measurement outside the predetermined specifications is alarmed (e.g. identified by coarse winding).

If the operating limit of the frictional force exerted by the spinning device 6 has been reached (NO output of block 600), the control unit 12 generates an alarm signal, for example via the third signal $S_3$ to be sent to the monitor 16. The corresponding optical fiber is then identified and further processed.

Depending on the type of spinning device used, variations of the inversion frequency $\nu$ and /or of the maximum excursion A of the moving member of the spinning device 6 may also be introduced to control the actual rotation $T_{act}$, as described in cited application US2002/0178758.

An exemplary embodiment of the spinning device 6 particularly suitable for the method and system of the present invention will now be described in details, with reference to figure 3 (side view) and Fig. 4 (top view). The same reference numerals are used for same elements.

The spinning device 6 comprises a first and a second roller 102 and 103 with cylindrical shape rotating about the respective rotation axis 104 and 105. The rollers 102 and 103 may be covered with a resilient material. The two rollers engage in opposite sides the optical fiber 3 while drawing. The axes 104 and 105 are parallel with each other and perpendicular to the axis of the fiber 3. The roller 103 is mounted on a carriage 107 and is held by two elements 111 and 112 in such a way that it can freely rotate about its axis 105. The roller 102 is mounted on a carriage 106 and is held by a first element 110 of Fig. 3 and a similar second element (not shown) on the other side of the roller, in such a way that it can freely rotate about its axis 104. The carriage 106 slides over a support 120, which is in turn firmly connected to the drawing tower. Analogously, the carriage 107 slides over a support 121, firmly connected to the drawing tower. The relative sliding movements of the two carriages 106 and 107 are substantially parallel each other, and parallel to the axis 104 and 105 of the two rollers 102 and 103.

The element 110 is connected to the carriage 106 through a pivotable joint 115 which acts as a fulcrum to tilt the roller 102 respect to roller 103. The double arrows curve in Fig. 3 illustrates the tilt movement of the element 110. The element 110 has a C-shaped protrusion 113 protruding from some point between the fulcrum 115 and the axis 104 of the roller 102. On the upper side of the element 113 a wheel 130 is mounted so that it can freely rotate around its axis 132, substantially parallel to the axis of the fiber 101. Similarly, the above-mentioned second element, positioned on the other side of the roller 102 with respect to the element 110, is mounted on the carriage 106 through a rotable hinge. Such an element has a C-shaped protrusion 114 similar to protrusion 113. On the upper side of the element 114 a wheel 131 is mounted so that it can freely rotate around its axis 134, substantially parallel to the axis of the fiber 101. The two wheels 130 and 131 can freely rotate on an element 140, over which they are biased by the effect of the spring 141, compressed between the carriage 106 and the lower arm of protrusion 113. Therefore, when the carriage 106 slides over the support 120, the two wheels 130 and 131 rotate onto the flat surface of 140. The element 140 can slide on a group of rails 145, 146, 147, firmly connected to the vertical upright 150, mounted on the support 121. The position of the element 140 with respect to the axis of the fiber 3 is driven by two piezoelectric elements 151, which are electronically driven and monitored, in such a way their extension is determined within 1 micron.

The elements 110, 113 and 130 define a first support carrying the first roller 102. The elements 121, 107, 111, 150, 145 and 146 define a second support carrying the second roller 103. The spring 141 acting on the first support biases the first support towards the element 140 and the force of biasing is set greater than the compression force typically involved during fiber rotation, so that, when the fiber is inserted between the two rollers, they substantially maintain the gap unchanged under the action of the biasing force. Depending on the position of the element 140, actuated by the piezoelectric elements 151 which act between said first and second support against the action of the spring 141, the gap between the two rollers 102 and 103 can be varied and maintained with high accuracy. The compression force is essentially determined, for given operating conditions, by the gap between the two rollers 102 and 103, as previously defined. The biasing force of the spring 141 fixes the maximum force of compression which may act on the fiber 3 by the two rollers 102 and 103 for a sufficiently small gap.

It is thus possible to control the frictional force acting on the optical fibre 3 during the rotation by controlling the value $\delta$ of the gap of the spinning device 6 of Fig. 3 and 4.

In an alternative configuration, the actuator 151 and the spring 141 are replaced by a stepping motor which control the position of the first roller 102 with respect to the second roller 103, for example by driving a micrometer screw acting on the first roller 102. In a still further configuration, the actuator may act on the spring 141 in order to control the biasing force between the two rollers, said biasing force being related to the compression force acting on the fiber 3, as described further above (in this case the gap, as defined above, is vanishing).

The spinning device 6 is driven to impart a pure sinusoid spinning function. Accordingly, the movement of the two carriages 106 and 107 is substantially a sinusoid as driven by a crankshaft 160 (shown in Fig. 4) rotating around its axis 161, and connected to the carriages through two elements 162 and 163. Such a movement will rotate the fiber 3 in a corresponding sinusoidal way. The shape of the crankshaft 160 determines the fixed amplitude A of the sinusoid, while the angular speed determines the inversion frequency $v$.

The experimental results of the processing of a set of 68 glass preforms (of nearly 300 km each) which have been drawn imparting a rotation according to the method of the present invention, will be illustrated below.

The preforms, having respective refractive index profile so as to result in conventional single mode optical fiber with a diameter of approximately 125 $\mu$m and low birefringence, were obtained by outside vapor deposition (OVD) process.

A vertical drawing system similar to the one described with reference to Fig. 2 was used to draw the set of preforms. The predetermined minimum average rotation was set at $T_{MIN}$=1.5 turns/m. No maximum average rotation $T_{MAX}$ was set. Drawing velocity $v_f$ was set at 18 m/s.

The spinning device 6 was of the kind described above with reference to Fig. 3 and 4, wherein the inversion frequency $v$ of the two rollers 102 and 103 was set at 3.7 Hz and maintained constant during the process. The excursion (amplitude A) of the transversal movement of the two rollers was about $\pm5$ mm (that is one roller has a position with respect to the central position expressed by $x=A\cos(2\pi vt)$ and the other by $x=-A\cos(2\pi vt)$).

A diameter monitoring system was used to measure the actual average spin imparted to the fiber via a numerical processing of the diameter measurement signal taken below the neck-down region of the preform, as described above. The actual average spin is obtained from a spectrum which is the average of four diameter signal spectra. The actual average spin is obtained at the beginning of the drawing process of each preform and during the process itself at a rate of one value every about 300-400 m of drawn fiber (each individual spectrum is taken at a rate of one every about 100 m).

When the target drawing velocity was achieved, after ramp-up, the piezoelectric elements 151 have been driven to get an initial average rotation of at least 2 turns/meter and no more than 3 turns/meter. The on-line measurements of spin have been used to check whether the level of the average spin was maintained higher than 1.5 turns/m throughout the whole drawing process. Such information has been used to retroactively tune the gap of the spinner device as needed in order to get the target minimum level of spin. In this way it was possible to guarantee that the average spin always remained above 1.5 turns/m along the whole process of each perform.

The result of the PMD measurements on the fiber production from the 68 preforms drawn according to the above, with the wavelength scanning method (Fixed Analyser Measurement method, IEC 60793-1-48 (Method A)) over a sample of bobbins each long about 5 to 20 km and wound at zero-tension, can be summarized as follows:

$$\text{Average PMD} = 0.028 \text{ ps}/\sqrt{\text{km}}$$

$$\text{Standard deviation PMD} = 0.006 \text{ ps}/\sqrt{\text{km}}$$

$$\text{PLDV} = 0.033 \text{ ps}/\sqrt{\text{km}}$$

This result shows the advantage of the methodology of the present invention with respect to a production in the same conditions but without spinning monitoring and feedback on the frictional force, which can be summarized as follows:

$$\text{Average PMD} = 0.040 \text{ ps}/\sqrt{\text{km}}$$

$$\text{Standard deviation PMD} = 0.020 \text{ ps}/\sqrt{\text{km}}$$

$$PLDV = 0.064 \text{ ps}/\sqrt{km}$$

The PMD Link Design Value (PLDV) is obtained according to document IEC 86C/265/CD entitled "IEC 61282-3: Guidelines for the calculation of PMD in fibre optic systems", paragraph 3.1.1.1 and 3.1.2.1. That is, from PMD measurements on a random sample of the whole production of fiber, a distribution of foreseen PMD values for a link of 24 fibers is obtained by Montecarlo simulation. The PLDV is defined such as 99.9% of the data stay below the PLDV.

It is evident the advantage in terms of better average PMD. A further advantage of the present invention, when applied to fiber drawing, is that, since the continuous monitoring and feedback may be used to guarantee a narrow distribution of the actual average rotation of the fiber along the whole drawing process, it is also expected a narrow distribution of the corresponding PMD. This is confirmed by the comparison of the PMD standard deviation values shown above. This in turn results in lower PLDV and, more important, in the possibility to reduce the number of PMD measurements, which are complex and time consuming.

The Applicant has verified that the method of the present invention is advantageously performed at least once (measure of actual spin, comparison with target spin and, in case, adjustment of the frictional force) in the first quarter of the total duration of the drawing process, calculated from the instant the drawing process has reached its regime conditions (e.g. the pre-set drawing velocity). Preferably, at least one additional control according to the method of the present invention is done after the first quarter. For example, at least one additional control at about half the process time. More preferably, the method of the present invention is repeated at least several times during the process, for example once every period equal to about 50% or 25% of the total drawing duration, preferably at regular intervals such as once every ten minutes.

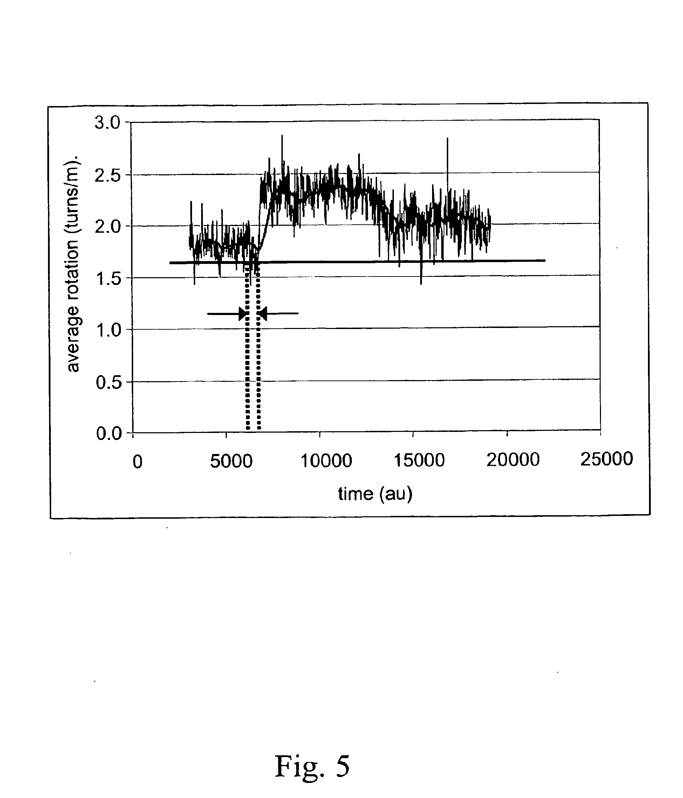

With reference to Fig 5, it will now be conceptually illustrated the principle of operation of the method of the present invention.

Fig. 5 shows the measured average rotation as a function of time in arbitrary units (a.u.) for an optical fiber drawn according to the above.

The alarm threshold for the average rotation ($T_{MIN}$) is exemplarily set at 1.65 turns/m and a feedback on the gap of the spinning device 6 of Figs. 3 and 4 was performed manually when this threshold was crossed for a significant period of time. As shown in Fig. 5 by the two arrows in proximity of the time of 6000 a.u., in correspondence of a time interval of about 300 a.u., which corresponds to a span length of fiber of about 5 km, the actual average rotation has been below threshold. Before 6000 a.u., the average rotation has been below the threshold for negligible time intervals. Thus, the piezoelectric elements 151 of Figs. 3 and 4 have been driven in order to reduce the gap of the spinning device 6 of Figs. 3 and 4 of about 10 μm. The average rotation promptly raised at an acceptable level. It is observed that for the data shown in Fig. 5, the feedback was not optimized, so that the decrease of the average rotation at about 13000 a.u. was not counterbalanced.

It is of course possible to configure the feedback control loop function in order to timely react to the variation in the measured average rotation.

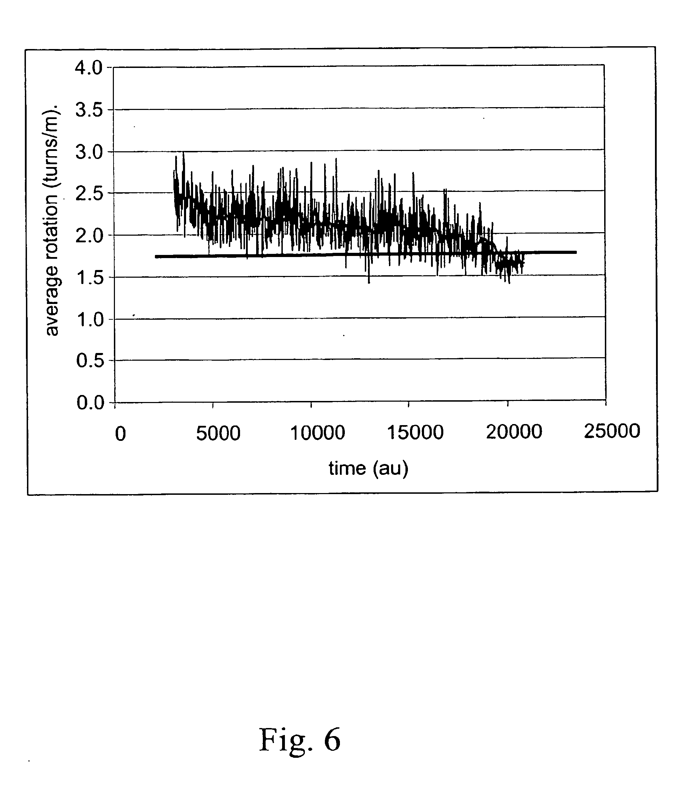

As a comparative example, Fig. 6 shows a plot similar to the one shown in Fig. 5 with the exception that no feedback was done during the drawing process. The average rotation progressively declines down to values below the specification range near the end of the drawing process. It is believed that the coefficient of friction has progressively decreased. An active feedback according to the present invention is able to correct for it by gradually reducing the gap between the first and the second roller 102 and 103 in order to increase the compression force.

Fig. 7 shows the average rotation (upper curve, left scale) and the spectrum quality (lower curve, right scale) during a drawing process (time arbitrary units) as exemplarily described above. The spectrum quality (of an average power spectrum obtained by averaging four power spectra) is defined according to the above. Again, the alarm threshold for the average rotation ($T_{MIN}$) is exemplarily set at 1.65 turns/m and the feedback on the gap of the spinning device 6 of Figs. 3 and 4 was performed manually. Up to 6000 arbitrary units of time, the measured average rotation rapidly fluctuated in a large range of variation (between about 1 to 3 turns/m). Most important, the measure of the average rotation was not reliable because the power spectrum quality was low (about 0.25, in any case below 0.5). It is believed that the optical fiber 101, probably due to a gap between the two rollers 102 and 103 larger than the optimal and thus a compressive force acting on the fiber not sufficient, were not firmly engaged between the two rollers.

The optical fiber is thought to irregularly slip and/or jump on the surface of the rollers 102 and 103, causing both a fluctuating average rotation and an irregular oscillation of the optical fiber in the direction transverse to the fiber axis. The latter may have given rise to a noisy power spectrum.

Near 6000 arbitrary units, the two rollers 102 and 103 were brought closer to each other reducing the gap of about 40 μm. The power spectrum improved considerably (quality greater than 0.5) and the measured average rotation showed a steady value complying with the specification (about 1.8 tums/m).

Accordingly, the Applicant has found that the power spectrum quality, which is related to the actual fiber rotation, is a good indicator of the correct working of the spinning device 6 and may be used to retroactively control it, in addition or alternatively to a specific spinning parameter such as the average rotation.

In an embodiment of the invention, the method of the present invention is aimed to optimize the compression force acting on the optical fiber in function of the instantaneous coefficient of friction. Referring again to Fig. 1, when the output of step represented by block 300 is YES (i.e. the imparted rotation is in the expected range), it is possible to configure the control unit 12 so as to decrease the compression force. In this way the method seeks the minimum compression force which is sufficient to get the predetermined rotation, in function of the instantaneous coefficient of friction. The advantage of this solution is that the fiber is subjected to a mechanical stress (e.g. squeezing) as minimum as possible, thus improving its mechanical properties.

In addition to the application described with respect to a drawing process, the method according to the present invention can be applied to other processes in which it is desired to guarantee a target actual rotation imparted to an optical fibre while the fibre is made to advance in a predetermined direction.

**Claims**

1. A method of imparting a predetermined rotation to an optical fibre around its axis, the method comprising the steps of:

    - advancing the optical fibre in a predetermined direction,
    - imparting to the optical fibre, during the step of advancing, a rotation about its axis through a frictional force acting on the optical fibre; and
    - measuring a parameter related to the imparted rotation during the step of advancing the optical fibre;

    **characterized in that** it comprises the further step of controlling, during the step of advancing the optical fibre, said frictional force responsively to the measured parameter, so as to achieve the predetermined rotation
    and **in that** the step of controlling the frictional force comprises the steps of comparing the measured parameter to a predetermined value related to the predetermined rotation and controlling the frictional force in response to said comparison..

2. The method of claim 1 wherein said frictional force is generated by the contact of the surface of the optical fibre with the surface of a moving member imparting the rotation to the optical fibre.

3. The method of claim 2 wherein the frictional force is the product of a compression force of the optical fibre against said surface of the moving member and a coefficient of friction between the surface of the optical fibre and the surface of the moving member, and wherein controlling the frictional force comprises controlling said compression force.

4. The method according to any of the preceding claims, wherein the step of measuring the parameter related to the imparted rotation comprises the step of measuring the diameter of the optical fibre.

5. The method of claim 4, wherein the step of measuring the parameter related to the imparted rotation further comprises generating a measurement signal related to the diameter of the optical fibre, generating a frequency spectrum of said measurement signal representative of the diameter measured and evaluating said parameter from said frequency spectrum.

6. The method according to claim 1, wherein the step of controlling the frictional force further comprises, in case the measured parameter is less than the predetermined value, the step of increasing the frictional force.

7. The method according to any of the preceding claims, wherein the parameter related to the imparted rotation is the average rotation.

8. The method according to claim 5, wherein the step of measuring the parameter related to the imparted rotation further comprises defining a quality parameter of said spectrum, comparing said quality parameter with a predefined threshold value, and wherein said evaluated quality parameter is less than or equal to a predetermined threshold value, the step of increasing the frictional force.

9. A method of producing an optical fibre comprising the steps of:

- heating a glass preform beyond its softening point;
- drawing the optical fibre from said preform in a drawing direction;
- applying a protective coating to the optical fibre; and
- imparting a predetermined rotation to the optical fibre according to the method of any of the preceding claims.

10. A system (1) for imparting a predetermined axial rotation to an optical fibre (3) advancing in a direction, the system comprising:

- a spinning device (6) suitable to be rotationally coupled to the optical fibre (3) through a frictional force;
- an actuator (151) operatively associated with said spinning device (6) to adjust said frictional force;
- a measurement device (10) apt to measure, while the optical fibre (3) is advancing in said direction, a parameter related to the fibre rotation; and
- a control unit (12) connected with said measurement device (10) and with said actuator (151) to drive in operation said actuator (151) responsively to said measured parameter, said the control unit (12) including a circuit suitable to compare said measured parameter with a predetermined value related to the predetermined rotation and to generate a control signal responsive to said comparison in order to drive said actuator (151).

11. A system (1) according to claim 10, wherein the device (6) is intended for rotating an optical fibre (3) about its axis (9), and comprises a contact member (102) apt to apply a frictional force to the surface of the optical fibre (3) and to impart a rotation to the optical fibre (3) about its axis (9) by said frictional force, and an actuator member (151) operatively connected to said contact member (102), **characterized in that** the actuator member (151) is electronically controllable in response to an external electronic signal to vary said frictional force.

12. A system (1) according to claim 11 wherein the device (6) comprises a further contact member (103) apt to define, together with said contact member (102), a gap to receive the optical fibre (3), wherein the actuator member (151) is apt to act on the contact member (102) to control said gap.

13. A system (1) according to claim 12 wherein the device (6), further comprises a first support member carrying said contact member (102), a second support member carrying said further contact member (103) and an elastic member (141) acting on the first support member to thrust said first support member towards said second support member, wherein said actuator member (151) acts between said first and second support against the action of said elastic member (141) to control said gap.

14. A system (1) according to of any of claims 11 to 13, wherein said actuator member (151) is a piezoelectric member.

15. A system (1) according to of claim 14, comprising a further contact member (103) apt to contact the optical fibre opposite said contact member, wherein said actuator member is apt to control a biasing force between the contact member (102) and the further contact member (103).

**Patentansprüche**

1. Verfahren zum Aufprägen einer vorbestimmten Drehung auf eine optische Faser um deren Achse, wobei das Verfahren die nachfolgenden Schritte umfasst:

Vorrücken der optischen Faser in einer vorbestimmten Richtung,
während des Schrittes des Vorrückens erfolgendes Aufträgen einer Drehung auf die optische Faser um deren Achse durch eine auf die optische Faser wirkende Reibungskraft; und
Messen eines Parameters im Zusammenhang mit der aufgeprägten Drehung während des Schrittes des Vorrückens der optischen Faser;
**dadurch gekennzeichnet, dass** es des Weiteren umfasst:

während des Schrittes des Vorrückens der optischen Faser einen Schritt des Steuerns der Reibungskraft in Reaktion auf den gemessenen Parameter, um so die vorbestimmte Drehung zu erreichen; und
wobei der Schritt des Steuerns der Reibungskraft die Schritte des Vergleichens des gemessenen Parameters mit einem vorbestimmten Wert im Zusammenhang mit der vorbestimmten Drehung und des Steuerns der Reibungskraft in Reaktion auf den Vergleich umfasst.

2. Verfahren nach Anspruch 1, wobei die Reibungskraft durch den Kontakt der Oberfläche der optischen Faser mit der Oberfläche eines sich bewegenden Elementes, das die Drehung auf die optische Faser aufprägt, erzeugt wird.

3. Verfahren nach Anspruch 2, wobei die Reibungskraft das Produkt einer Kompressionskraft der optischen Faser gegen die Oberfläche des sich bewegenden Elementes und eines Reibungskoeffizienten zwischen der Oberfläche der optischen Faser und der Oberfläche des sich bewegenden Elementes ist und wobei das Steuern der Reibungskraft ein Steuern der Kompressionskraft umfasst.

4. Verfahren nach einem der vorhergehenden Ansprüche, wobei der Schritt des Messens des Parameters im Zusammenhang mit der aufgeprägten Drehung den Schritt des Messens des Durchmessers der optischen Faser umfasst.

5. Verfahren nach Anspruch 4, wobei der Schritt des Messens des Parameters im Zusammenhang mit der aufgeprägten Drehung des Weiteren ein Erzeugen eines Messsignals im Zusammenhang mit dem Durchmesser der optischen Faser, ein Erzeugen eines Frequenzspektrums des Messsignals zur Darstellung des gemessenen Durchmessers und ein Bewerten des Parameters aus dem Frequenzspektrum umfasst.

6. Verfahren nach Anspruch 1, wobei der Schritt des Steuerns der Reibungskraft des Weiteren für den Fall, dass der gemessene Parameter kleiner als der vorbestimmte Wert ist, den Schritt des Vergrößerns der Reibungskraft umfasst.

7. Verfahren nach einem der vorhergehenden Ansprüche, wobei der Parameter im Zusammenhang mit der aufgeprägten Drehung die Durchschnittsdrehung ist.

8. Verfahren nach Anspruch 5, wobei der Schritt des Messens des Parameters im Zusammenhang mit der aufgeprägten Drehung des Weiteren ein Definieren eines Güteparameters des Spektrums, ein Vergleichen des Güteparameters mit einem vorbestimmten Schwellenwert und, wenn bzw. wobei der bewertete Güteparameter kleiner oder gleich einem vorbestimmten Schwellenwert ist, einen Schritt des Vergrößerns der Reibungskraft umfasst.

9. Verfahren zum Herstellen einer optischen Faser, umfassend die nachfolgenden Schritte:

   Erwärmen einer Glasvorform über ihren Erweichungspunkt hinaus;
   Ziehen der optischen Faser aus der Vorform in einer Ziehrichtung;
   Aufbringen einer Schutzbeschichtung auf die optische Faser; und
   Aufprägen einer vorbestimmten Drehung auf die optische Faser entsprechend dem Verfahren nach einem der vorhergehenden Ansprüche.

10. System (1) zum Aufprägen einer vorbestimmten axialen Drehung auf eine in einer Richtung vorrückende optische Faser (3), wobei das System umfasst:

    eine Drehvorrichtung (6), die dafür geeignet ist, drehtechnisch mit der optischen Faser (3) durch eine Reibungskraft gekoppelt zu werden;
    ein Stellglied (151), das funktionell mit der Drehvorrichtung (6) verknüpft ist, um die Reibungskraft anzupassen;
    eine Messvorrichtung (10), die dafür geeignet ist, einen Parameter im Zusammenhang mit der Faserdrehung zu messen, während die optische Faser (3) in der Richtung vorrückt; und
    eine Steuereinheit (12), die mit der Messvorrichtung (10) und mit dem Stellglied (151) verbunden ist, um im Betrieb das Stellglied (151) in Reaktion auf den gemessenen Parameter anzusteuern, wobei die Steuereinheit (12) eine Schaltung beinhaltet, die dafür geeignet ist, den gemessenen Parameter mit einem vorbestimmten Wert im Zusammenhang mit der vorbestimmten Drehung zu vergleichen und ein Steuersignal in Reaktion auf den Vergleich zu erzeugen, um das Stellglied (151) anzusteuern.

11. System (1) nach Anspruch 10, wobei die Vorrichtung (6) dafür geeignet ist, eine optische Faser (3) um deren Achse (9) zu drehen, und umfasst: ein Kontaktelement (102), das dafür geeignet ist, eine Reibungskraft auf die Oberfläche der optischen Faser (3) auszuüben und eine Drehung auf die optische Faser (3) um deren Achse (9) durch die Reibungskraft aufzuprägen, und ein Stellgliedelement (151), das funktionell mit dem Kontaktelement (102) verbunden ist, **dadurch gekennzeichnet, dass** das Stellgliedelement (151) elektronisch in Reaktion auf ein externes elektronisches Signal steuerbar ist, um die Reiburigskraft zu variieren.

12. System (1) nach Anspruch 11, wobei die Vorrichtung (6) des Weiteren ein Kontaktelement (103) umfasst, das dafür geeignet ist, zusammen mit dem Kontaktelement (12) einen Spalt zur Aufnahme der optischen Faser (3) festzulegen, wobei das Stellgliedelement (151) dafür geeignet ist, auf das Kontaktelement (102) zur Steuerung des Spalts zu wirken.

13. System (1) nach Anspruch 12, wobei die Vorrichtung (6) des Weiteren umfasst: ein erstes Stützelement, das das Kontaktelement (102) trägt, ein zweites Stützelement, das das weitere Kontaktelement (103) trägt, und ein elastisches Element (141), das auf das erste Stützelement wirkt, um das erste Stützelement hin zu dem zweiten Stützelement zu stoßen, wobei das Stellgliedelement (151) zwischen der ersten und zweiten Stütze gegen die Wirkung des elastischen Elementes (141) wirkt, um den Spalt zu steuern.

14. System (1) nach einem der Ansprüche 11 bis 13, wobei das Stellgliedelement (151) ein piezoelektrisches Element ist.

15. System (1) nach Anspruch 14, umfassend ein weiteres Kontaktelement (103), das dafür geeignet ist, mit der optischen Faser entgegengesetzt bzw. gegenüberliegend zu dem Kontaktelement in Kontakt zu treten, wobei das Stellgliedelement dafür geeignet ist, eine Vorspannkraft zwischen dem Kontaktelement (102) und dem weiteren Kontaktelement (103) zu steuern.


## Revendications

1. Procédé pour transmettre une rotation prédéterminée à une fibre optique autour de son axe, le procédé comprenant les étapes suivantes:

   - l'avancement de la fibre optique dans une direction prédéterminée,
   - la transmission à la fibre optique, au cours de l'étape d'avancement, d'une rotation autour de son axe par le biais d'une force de frottement agissant sur la fibre optique; et
   - la mesure d'un paramètre relatif à la rotation transmise au cours de l'étape d'avancement de la fibre optique;

   caractérisé en ce qu'il comprend l'étape supplémentaire de contrôle, au cours de l'étape d'avancement de la fibre optique, de ladite force de frottement en réponse au paramètre mesuré, afin d'obtenir la rotation prédéterminée et en ce que l'étape de contrôle de la force de frottement comprend les étapes de comparaison du paramètre mesuré à une valeur prédéterminée relative à la rotation prédéterminée et de contrôle de la force de frottement en réponse à ladite comparaison.

2. Procédé selon la revendication 1, dans lequel ladite force de frottement est générée par le contact de la surface de la fibre optique avec la surface d'un élément mobile transmettant la rotation à la fibre optique.

3. Procédé selon la revendication 2, dans lequel la force de frottement est le produit d'une force de compression de la fibre optique contre ladite surface de l'élément mobile et d'un coefficient de frottement entre la surface de la fibre optique et la surface de l'élément mobile, et dans lequel le contrôle de la force de frottement comprend le contrôle de ladite force de compression.

4. Procédé selon l'une quelconque des revendications précédentes, dans lequel l'étape de mesure du paramètre relatif à la rotation transmise comprend l'étape de mesure du diamètre de la fibre optique.

5. Procédé selon la revendication 4, dans lequel l'étape de mesure du paramètre relatif à la rotation transmise comprend en outre la génération d'un signal de mesure relatif au diamètre de la fibre optique, la génération d'un spectre de fréquence dudit signal de mesure représentatif du diamètre mesuré et l'évaluation dudit paramètre à partir dudit spectre de fréquence.

6. Procédé selon la revendication 1, dans lequel l'étape de contrôle de la force de frottement comprend en outre, dans le cas où le paramètre mesuré est inférieur à la valeur prédéterminée, l'étape d'augmentation de la force de frottement.

7. Procédé selon l'une quelconque des revendications précédentes, dans lequel le paramètre relatif à la rotation transmise est la rotation moyenne.

8. Procédé selon la revendication 5, dans lequel l'étape de mesure du paramètre relatif à la rotation transmise comprend en outre la définition d'un paramètre de qualité dudit spectre, la comparaison dudit paramètre de qualité à une valeur de seuil prédéfinie, et lorsque ledit paramètre de qualité évalué est inférieur ou égal à une valeur de seuil prédéterminée, l'étape d'augmentation de la force de frottement.

9. Procédé de fabrication d'une fibre optique comprenant les étapes suivantes:

- le chauffage d'une préforme de verre au-delà de son point de ramollissement;
- l'étirage de la fibre optique à partir de ladite préforme dans une direction d'étirage;
- l'application d'un revêtement de protection sur la fibre optique; et
- la transmission d'une rotation prédéterminée à la fibre optique selon le procédé de l'une quelconque des revendications précédentes.

10. Système (1) pour transmettre une rotation axiale prédéterminée à une fibre optique (3) avançant dans une direction, le système comprenant:

- un dispositif de filage (6) adapté pour être couplé de manière rotative à la fibre optique (3) par le biais d'une force de frottement;
- un actionneur (151) associé de manière opérationnelle audit dispositif de filage (6) pour régler ladite force de frottement;
- un dispositif de mesure (10) apte à mesurer, lorsque la fibre optique (3) avance dans ladite direction, un paramètre relatif à la rotation de la fibre; et
- une unité de contrôle (12) connectée audit dispositif de mesure (10) et audit actionneur (151) pour mettre en marche ledit actionneur (151) en réponse audit paramètre mesuré, ladite unité de contrôle (12) comportant un circuit adapté pour comparer ledit paramètre mesuré à une valeur prédéterminée relative à la rotation prédéterminée et pour générer un signal de contrôle en réponse à ladite comparaison afin de contrôler ledit actionneur (151).

11. Système (1) selon la revendication 10, dans lequel le dispositif (6) est destiné à faire tourner une fibre optique (3) autour de son axe (9) et comprend un élément de contact (102) apte à appliquer une force de frottement à la surface de la fibre optique (3) et à transmettre une rotation à la fibre optique (3) autour de son axe (9) au moyen de ladite force de frottement, et un élément actionneur (151) connecté de manière opérationnelle audit élément de contact (102), **caractérisé en ce que** l'élément actionneur (151) est contrôlable électroniquement en réponse à un signal électronique externe pour faire varier ladite force de frottement.

12. Système (1) selon la revendication 11, dans lequel le dispositif (6) comprend un élément de contact supplémentaire (103) apte à définir, en conjugaison avec ledit élément de contact (102), un espace pour recevoir la fibre optique (3), dans lequel l'élément actionneur (151) est apte à agir sur l'élément de contact (102) pour contrôler ledit espace.

13. Système (1) selon la revendication 12, dans lequel le dispositif (6) comprend en outre un premier élément de support portant ledit élément de contact (102), un second élément de support portant ledit élément de contact supplémentaire (103) et un élément élastique (141) agissant sur le premier élément de support pour exercer une poussée sur ledit premier élément de support vers ledit second élément de support, dans lequel ledit élément actionneur (151) agit entre lesdits premier et second supports contre l'action dudit élément élastique (141) pour contrôler ledit espace.

14. Système (1) selon l'une quelconque des revendications 11 à 13, dans lequel ledit élément actionneur (151) est un élément piézoélectrique.

15. Système (1) selon la revendication 14, comprenant un élément de contact supplémentaire (103) apte à entrer en contact avec la fibre optique opposée audit élément de contact, dans lequel ledit élément actionneur est apte à contrôler une force de sollicitation entre l'élément de contact (102) et l'élément de contact supplémentaire (103).

Fig. 1

Fig. 2

Fig. 3

Fig. 4

Fig. 5

Fig. 6

24

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040163418 A
- US 5298047 A
- US 6324872 B
- US 20020178758 A
- US 6791678 B

### Non-patent literature cited in the description

- IEC 61282-3: Guidelines for the calculation of PMD in fibre optic systems. *IEC 86C/265/CD*